# EUROPEAN PATENT SPECIFICATION

(11) **EP 1 107 884 B1**
(45) Date of publication and mention of the grant of the patent: **26.05.2004**
(21) Application number: 99945319.4
(22) Date of filing: 27.08.1999
(51) Int. Cl.: B60R 21/16

(54) **AIRBAG WITH CHAMBERS**
MEHRKAMMER-AIRBAG
AIRBAG A COMPARTIMENTS

(30) Priority: 28.08.1998 US 143042
(43) Date of publication of application: 20.06.2001
(73) Proprietor: Delphi Technologies, Inc., Troy, MI 48007 (US)
(72) Inventor: CONLEE, James, Kent, Dayton, OH 45426-1135 (US); VARCUS, Johannes-Alexander, D-45549 Sprockhoevel (DE); NILSON, Hans, Gert, D-42369 Wuppertal (DE)
(74) Representative: Denton, Michael John
(86) International application number: PCT/US1999/019850
(87) International publication number: WO 2000/012359

(56) References cited:
- EP-A- 0 061 828
- EP-A- 0 584 782
- WO-A-97/47497
- US-A- 3 900 210
- US-A- 5 282 646

## Description

The invention relates to an airbag for impact protection of the occupants of a motor vehicle, the airbag having an outer shell that can be inflated with gas through a gas inlet opening.

After detection of an abrupt deceleration movement of the motor vehicle the conventional airbag is opened rapidly by inflation in the direction of a collision zone in which the vehicle occupant interconnects with the airbags.

Document EP 0584782 A1 (the D1 reference) according to the features of preamble of claim 1 illustrates an inflatable gas bag having two chambers and a first, that is, a larger chamber that surrounds a second chamber. The first chamber is defined by wall parts, and its material is larger in permeability than the material defining the second chamber.

One of the objects of the invention is to devise an airbag which assures a rapid and simultaneously gentle impact protection for a motor vehicle occupant.

According to exemplary embodiments of the present intervention these and other objects are achieved by an airbag as defined in the claims.

The inner separating wall according to the invention therefore divides the interior volume of the airbag into at least two chambers. Through the gas inlet opening provided on the first chamber, the first chamber may initially be inflated essentially fully and tightly, while because of the flow-inhibiting action of the inner separating wall the second chamber only becomes fully inflated later relative to the total inflation of the first chamber. The inflation of the airbag therefore takes place in two steps, during which the internal separating wall selectively lowers the speed of the influx of gas from the first chamber into the second chamber relative to the velocity of the gas flowing through the gas inlet opening into the first chamber. A time-delayed inflation of the second chamber in accordance with the present invention therefore is present even if the second chamber is inflated simultaneously with the inflation of the first chamber but at reduced speed.

The airbag according to the invention has the advantage that part of its volume can be inflated in an inhibited way and thus more gently relative to an occupant, while a certain base volume of the airbag has already been inflated so that impact protection of the occupant is basically provided by known means. The outer shell of the airbag after reaching this base volume moves toward the anticipated impact zone at reduced speed so that an impacting occupant is under certain conditions pushed backward until the airbag reaches the intended total volume.

This operating mode with time-delayed inflation of the two chambers can be achieved especially advantageously if a two-step gas generator is used for inflating the airbag according to the invention, i.e., a gas generator which, in a first step, releases a certain volume of gas at a certain pressure and, in a subsequent second step, releases an additional quantity of gas especially at a higher pressure. Alternatively to the use of a two-step gas generator, a time-delayed inflation of the two chambers can also be achieved on the basis of the flow-inhibiting action of the inner separating wall even when a single-step gas generator is used without an additional ignition mechanism. No nominal breaking points or tear lines are necessary inside the airbag in either case.

Another advantage of the airbag according to the invention is the fact that the first chamber may be inflated very rapidly because of its small base volume relative to the total volume of the airbag and may accordingly be brought into the desired position inside the motor vehicle.

For fixation on the inside of the airbag's outer shell, the inner separating wall according to the invention can be stitched or welded to the outer shell.

The inner separating wall of the airbag according to the invention relative to that cross section of the inner volume of the inflated airbag which corresponds in its position to the intended reach of the inner separating wall is preferably designed as a predominantly or totally closed area. In the first case, the inner separating wall may be partly gas permeable; in the second case, it must be partly gas permeable. Such a gas permeability of the inner separating wall can be achieved especially as follows:

For example, the inner separating wall may consist of a material which is permeable for the gas intended for inflating the airbag. Alternatively or additionally the inner separating wall may have openings, especially slit openings or perforations through which gas can flow from the first chamber into the second chamber. These openings may be distributed along the inner separating wall and especially inside its border strip. It is also possible for the openings to be designed in such a way that the inner separating wall is not affixed along its entire border strip to the inner side of the airbag outer shell. In this case the openings are formed along those segments of the border strip which are not connected to the airbag outer shell but rather face it without attachment, for example.

In order to achieve the inflation of the two chambers of the airbag in two distinctly pronounced successive steps the inner separating wall may be designed to be pressure dependent in its flow-inhibiting action so that it permits the gas to flow through as a function of the pressure difference prevailing between the gas of the first chamber and the gas of the second chamber.

This pressure-dependent behavior of the inner separating wall may be relatively abrupt so that gas may flow from the first chamber into the second chamber only after a certain minimum pressure difference is reached. Such an airbag design may be combined especially advantageously with the above-mentioned use of a two-step gas generator, in which case the pressure difference, and therefore the flow behavior of the inner separating wall and the beginning of inflation of the second chamber can be governed very precisely in time. Alternatively to this, the pressure-dependent behavior may follow a continuous curve, i.e. with increasing pressure buildup inside the first chamber, gas may flow against an increasingly weaker inhibiting effect through the inner separating wall into the second chamber.

A pressure-dependent flow inhibition can be achieved, e.g., through openings inside the inner separating wall which display an increasingly larger opening area with increasing pressure and/or deformation of the inner separating wall, i.e., in a discontinuous or an essentially linear dependence on the pressure buildup.

In a preferred variant of the invention, the inner separating' wall in the inflated state of the airbag extends transversely, especially essentially at right angles, to a main flow direction, in which the gas used to inflate the airbag flows through the gas inlet opening into the first chamber of the airbag. Alternatively or additionally it is preferable for the inner separating wall to be arranged transversely, especially essentially at right angles to a main impact direction in which the impact of a occupant of the motor vehicle is anticipated so as to be cushioned by the airbag. In this way the first chamber, the second chamber and the impact zone may be arranged relative to the occupant in an extension of the main impact direction. The gas intended to inflate the second chamber may flow through the inner separating wall against the main impact direction in The case of an already inflated first chamber, and accordingly the second chamber may be inflated completely against the main impact direction.

In another preferred variant, the airbag according to the invention has at least one tension element inside its outer shell, especially a tension band which has a small area compared to the cross section of the inner volume of the airbag along the plane covered by the tension element. Such tension elements are commonly used for limiting the shape or volume of airbags. The known tension elements or tension bands are also unsuitable for fulfilling the function of the inner separating wall according to the invention, i.e., the inhibition of gas flow, because of their relatively small area. With the tension element according to the invention the inner separating wall is affixed to the inside of the outer shell in such a way that the position of the inner separating wall is stabilized during the inflation of the airbag as well as in the inflated airbag.

The invention assures high flexibility with regard to the volume ratios of the two chambers. For example, the volume of the first chamber of the inflated airbag may be larger than the volume of the second chamber in order to make a relatively large base volume available for a rapid and safe impact protection by the especially rapidly inflatable first chamber. Depending on the case of application, the volumes of the first and second chambers, however, may also be approximately equal, or the volume of the second chamber may be larger than the volume of the first chamber when the airbag is in the inflated state.

Other preferred variants of the invention are described in the subclaims. The invention is described in the following by examples of embodiment with reference to the drawings, in which:
- Figures 1a and 1b:: show a perspective view and a side view of a driver-side airbag according to the invention, where only the first chamber is completely inflated,
- Figures 2a and 2b: show a perspective view and a side view of the driver-side airbag in Figures 1a and 1b, where the first chamber and the second chamber are fully inflated,
- Figures 3a and 3b: show a perspective view and a side view of a top-mounted passenger airbag according to the invention in the fully inflated state,
- Figures 4a and 4b: show a perspective view and a side view of a centrally mounted passenger airbag according to the invention in the fully inflated state, and
- Figures 5a and 5b: show a perspective view and a side view of a bottom-mounted passenger airbag according to the invention in the fully inflated state.

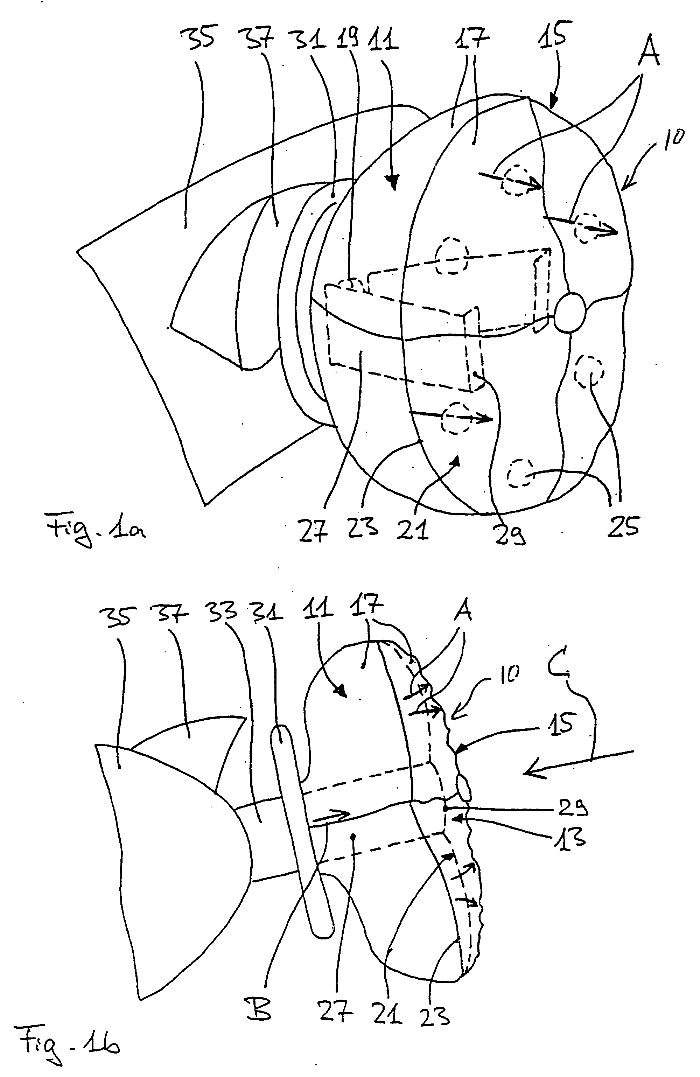

Figures 1a and 1b show in a perspective view and a side view a first version of the airbag 10 according to the invention. The airbag 10 is mounted inside a motor vehicle and is provided there for cushioning the driver of the motor vehicle in the event of a frontal collision. This airbag 10 has a first chamber 11 which in the representation in Figures 1a and 1b is essentially fully inflated, and a second chamber 13 which is only slightly inflated in the state of the airbag 10 shown. The two chambers 11, 13 are bounded by a common outer shell 15 which consists of several sections of fabric 17 stitched together. The first chamber 11 essentially has the shape of a spherical cap bounded by a circular cross section, with the second chamber 13 adjoining the circular cross section, and the outer shell 15 of the first chamber 11 on its side lying opposite the circular cross section has a gas inlet opening 19.

The two chambers 11, 13 are separated from each other by an inner separating wall 21 which essentially corresponds in its position and in its outline to the above-mentioned circular cross section of the first chamber 11. The inner separating wall 21 is stitched along a therefore essentially circularly running circumferential seam 23 to the fabric segments 17 of the outer shell 15 of the first chamber 11 or the second chamber 13.

The inner separating wall 21 has six uniformly spaced opening holes 25.

The first chamber 11 has in its interior two tension bands 27 which in each case are stitched to one end of the gas inlet opening 19 adjacent to the outer shell 15 of the first chamber 11 and at the other end to the inner separating wall 21 by means of a stitching segment 29.

The airbag 10 shown is affixed by the fabric segments 17 forming the outer shell 15 of the first chamber 11 in the vicinity of the gas inlet opening 19 to a steering wheel 31. This steering wheel 31 is connected via a steering column or its covering 33 to a front console 35 on which an instrument panel 37 is mounted in the region of the steering wheel 31.

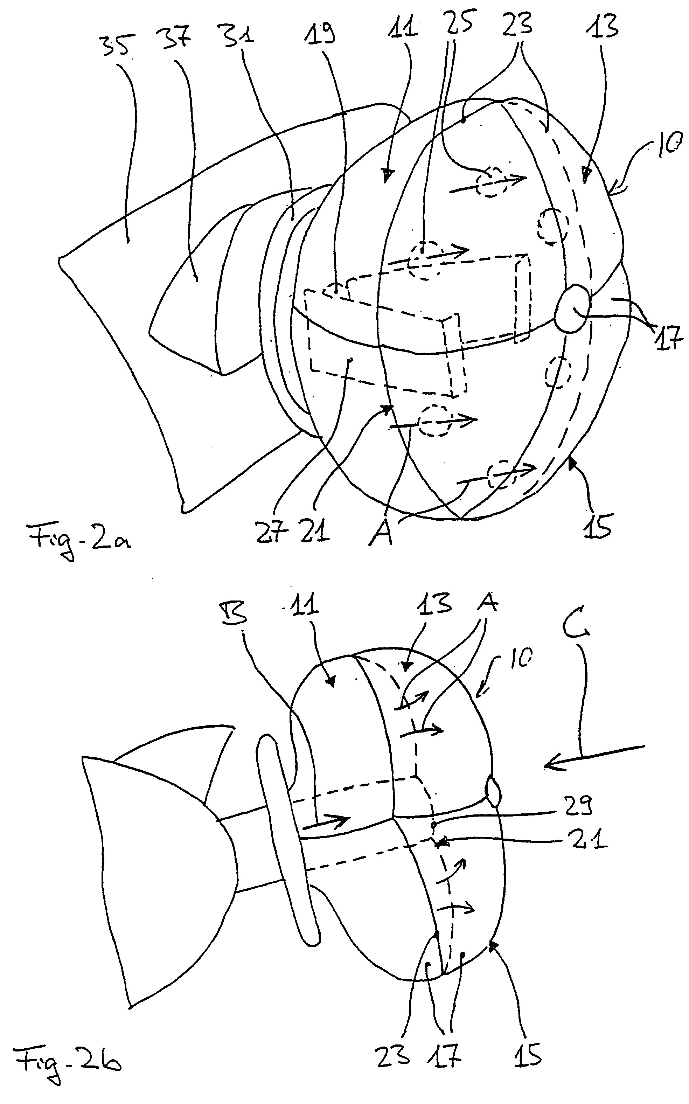

Figures 2a and 2b show the airbag 10 according to Figures 1a and 1b in the corresponding views, respectively, with the same reference numbers always denoting the same parts. In the state of the airbag 10 shown in Figures 2a and 2b, both the first chamber 11 and the second chamber 13 are fully inflated.

The airbag shown in Figures 1a, 1b, 2a, and 2b preferably lessens the rearward motion of the driver of a the motor vehicle, e.g., caused by a frontal collision along a main impact direction C. A corresponding decelerating motion of the motor vehicle is registered via a suitable conventional sensor after which a gas generator (not shown) arranged, e.g., on the steering wheel 31 or the steering column cover 33, releases the quantity of gas necessary to inflate the airbag 10 within a short time.

This gas flows initially through the gas inlet opening 19 along a main flow direction B into the first chamber 11 so that the this chamber is rapidly essentially fully inflated. At the same time only a relatively small quantity of this gas flows in flow-through direction A from the first chamber 11 through the perforations 25 of the inner separating wall 21 into the second chamber 13. Since the inner separating wall 21 is formed as a closed area with only a small number of perforation openings 25 it retards the inflation of the second chamber 13 compared to the speed of inflation of the first chamber 11.

The state achieved immediately after the complete inflation of the first chamber 11 is shown in Figures 1a and 1b. The tension bands 27 at this time of inflation of the airbag 10 are already tight and cause the inner separating wall between the circumferential seam 23 and the stitching segments 29 of the tension bands 27 to tighten up so that the first chamber 11 retains the desired form of a spherical cap in the profile shown in Figure 1b. The inner separating wall 21 in this case assumes the shape of a concavely curved membrane relative to the gas inlet opening 19 as indicated in Figure 1b by the cross-sectional outer contour of the inner separating wall 21, shown as a broken line. The inner separating wall 21 is essentially perpendicular not only to the main flow direction B but also to the main impact direction C.

After the inflation of the first chamber 11 the gas subsequently released by the gas generator finally also fully inflates the second chamber 13 as indicated in Figures 2a and 2b. At this time the inner separating wall 21 retains the above-mentioned membrane shape.

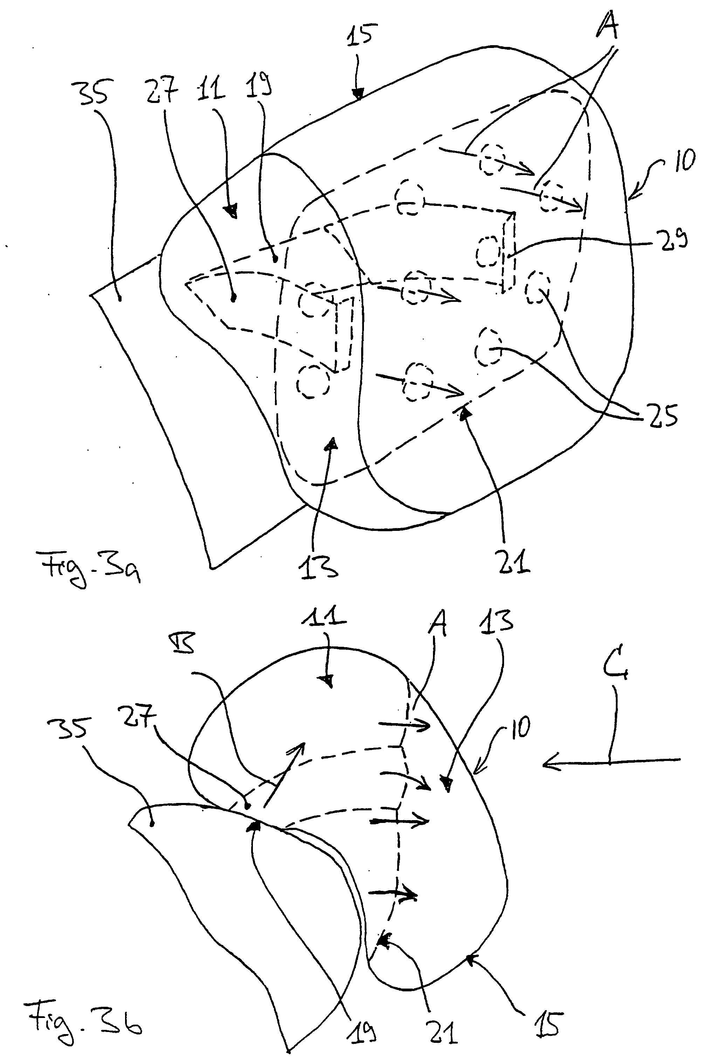

Other examples of embodiment of the airbag according to the invention, in each case in a version of a passenger-side airbag, are described below with reference to Figures 3a, 3b and 4a, 4b, and 5a, 5b, where the same reference numbers refer to the same parts as in Figures 1a, 1b, 2a, and 2b.

Figures 3a and 3b show an airbag 10 according to the invention in a perspective view and side view which is in the top mount design for the protection of a passenger of a motor vehicle. Figures 3a and 3b show this airbag 10 in the fully inflated state.

The chamber 11 which is inflated first and at relatively high speed extends along the top side of the front console 35 of the motor vehicle in the vicinity of the gas inlet opening 19. The inner separating wall 21 extends essentially in the vertical direction and perpendicular to the main impact direction C. Therefore the first chamber 11 bounded by the inner separating wall 21 to the extent that it is essentially fully inflated and the second chamber 13 not yet inflated, forms a vertical wall to protect the upper body of the passenger when he is flung in the main impact direction C. As soon as the second chamber 13 is inflated through the gas inlet opening 19 and the inner separating wall 21 it can push the passenger back against the main impact direction C or hold the passenger in a cushioned and therefore gentle way. The totally inflated chamber 13 serves especially to protect the lower body of the passenger and prevents it from being flung vertically.

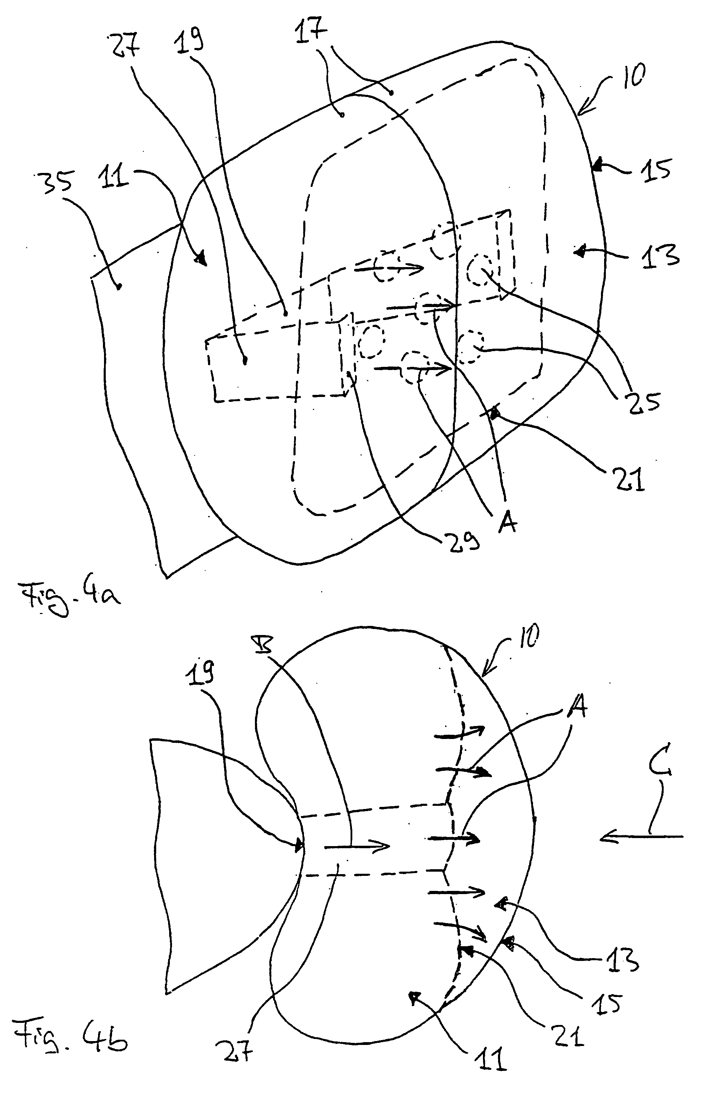

Figures 4a and 4b show a passenger airbag 10 according to the invention in the mid-mounted arrangement. In the fully inflated state of the airbag 10 shown here the inner separating wall 21 extends in the vertical direction and perpendicular to both the main flow direction B and also to the main impact direction C. The inner separating wall 21 is affixed along its entire essentially rectangular outline to the inner side of the outer shell 15 and thus separates its internal volume into a first chamber 11 and a second chamber 13 whose volume is only a fraction of the volume of the first chamber 11. In its center the inner separating wall 21 displays seven uniformly spaced perforation openings 25.

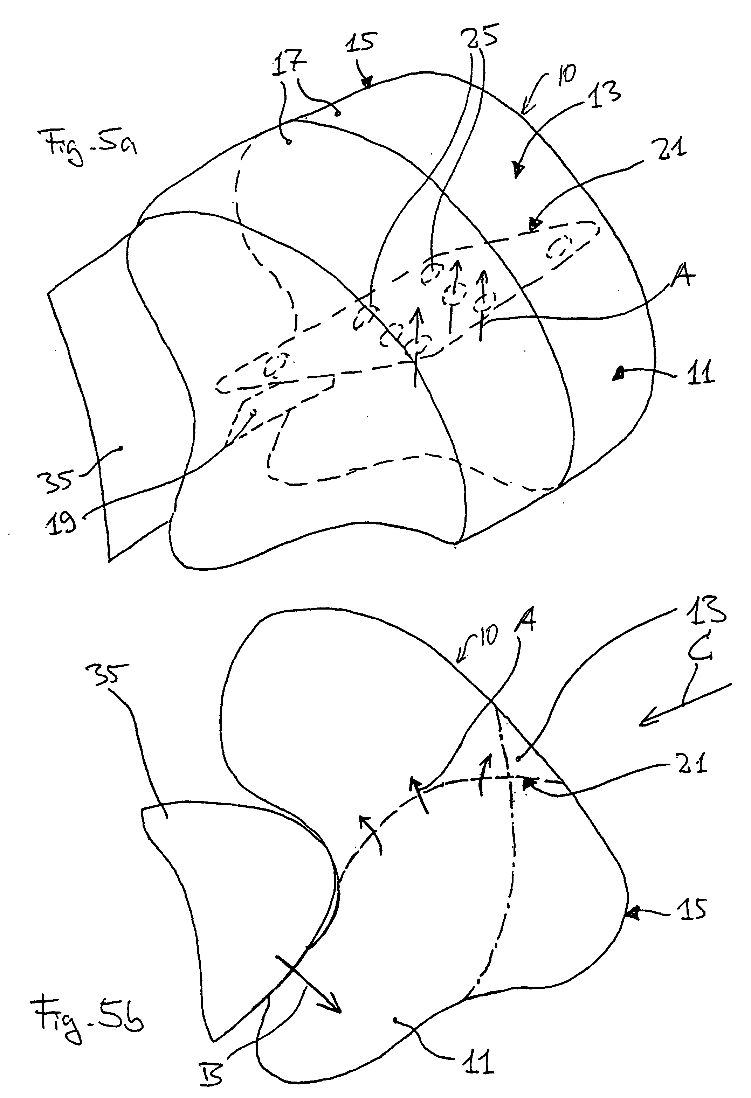

Figures 5a and 5b show another example of a passenger airbag 10 according to the invention affixed to the bottom of the front console 35 in the low-mounted arrangement. In this airbag 10 version the inner separating wall 21 does not run perpendicular to the main flow direction B but rather is slanted relative to a horizontal alignment. The base volume formed by the first chamber 11 below the inner separating wall 21 of this airbag therefore serves chiefly to protect and restrain the lower body of the passenger. Only the second chamber 13 which inflates with a time delay relative to the first chamber 11 above the inner separating wall 21 causes an effective and simultaneously relatively gentle protection.

As an alternative to the position of the inner separating wall 21 shown by the broken line in Figures 5a and 5b, this wall may also occupy an essentially vertical alignment as indicated by the broken-dotted line in Figure 5b. In this case the partial volume of the airbag 10 facing toward the passenger, therefore against the main impact direction C, would be inflated as the second chamber 13 with a time lag and at reduced speed.

## Claims

1. An airbag (10) for impact protection of occupants of a motor vehicle, which airbag (10) has an outer shell (15) that can be inflated with gas through an inlet opening (19), a flow-inhibiting inner separating wall (21) provided inside the outer shell (15) and separating the inner volume of the outer shell (15) into a first chamber (11) and a second chamber (13) in such a way that the first chamber (11) is inflatable first through the gas inlet opening (19) to form a base volume and the second chamber (13) is selectively delayed in inflation by the inner separating wall (21) for inhibited further enlargement of the airbag volume in the direction of an impact zone, the flow-inhibiting inner separating wall having a plurality of openings (25) which allow fluid communication from said first chamber (11) to said second chamber (13), **characterised in that** said plurality of openings (25) also allow fluid communication from said second chamber (13) to said first chamber (11).

2. The airbag (10) as in claim 1, further **characterized by** a pair of tension elements (27) extending between the outer shell (15) and the inner separating wall (21), wherein at least one of said plurality of openings (25) is disposed between said pair of tension elements (27) and another one of said plurality of openings (25) is disposed between one of said pair of tension elements (27) and the outer shell (15) of the airbag (10).

3. The airbag (10) as in claim 1, **characterized by** the inner separating wall (21) being designed to be at least partly gas permeable.

4. The airbag (10) as in claim 1 **characterized by** the inner separating wall (21) being formed of an essentially gas permeable material for selective admission of gas from the first chamber (11) into the second chamber (13).

5. The airbag (10) as in claim 1, **characterized by** the inner separating wall (21) being made of essentially gas-tight material.

6. The airbag (10) as in claim 1, **characterized by** at least one of the plurality of openings (25) being disposed in the inner separating wall (21) between a marginal strip of the inner separating wall (21) and the inside of the airbag outer shell (15).

7. The airbag (10) as in claim 1, **characterized by** the inner separating wall (21) being designed to be flow inhibiting as a function of pressure, especially with openings (25) which change their opening area as a function of the gas pressure acting on the inner separating wall (21).

8. The airbag (10) as in claim 7, **characterized by** the inner separating wall (21) permitting gas to flow from the first chamber (11) into the second chamber (13) essentially only after a certain minimal pressure difference between the first chamber (11) and the second chamber (13) is reached.

9. The airbag (10) as in claim 1, **characterized in that** the inner separating wall (21) of the airbag (10) is traversely disposed with respect to a main flow direction (B) in which gas flows through the gas inlet opening (19) when the airbag (10) is in the inflated state.

10. The airbag (10) as in claim 1, **characterized in that** the inner separating wall (21) of the airbag (10) is traversely disposed with respect to the inlet opening (19) and a main direction (C) of impact, when the airbag is inflated in the vehicle.

11. The airbag (10) as in claim 1 further comprising a two-step gas generator for producing a first volume of the gas and, subsequently, a second volume of the gas to inflate the airbag.

12. The airbag (10) as in any of the preceding claims **characterized in that** the volume of the first chamber is smaller than the volume of the second chamber on full inflation.

13. The airbag (10) as in claims 9 or 10 **characterized in that** the inner separating wall (21) is perpendicular to the inlet opening (19) and the main direction (C) of impact, when the airbag is inflated in the vehicle.

14. The airbag (10) as in claim 1, **characterized in that** the inner separating wall (21) of the airbag (10) is positioned such that the inner separating wall (21) limits the expansion of the air bag in a first direction and gas flow through said plurality of openings is substantially opposite to gas flow through the inlet opening (19), when the airbag is inflated in the vehicle.

15. The airbag (10) as in claim 14, **characterized in that** the first direction is perpendicular to gas flow through said plurality of openings (25).

16. The airbag (10) as in any one of the preceding claims wherein at least one of the plurality of openings (25) is disposed between the outer shell (15) and the inner separating wall (21) wherein the entire periphery of the inner separating wall (21) is not secured to the outer shell (15).

17. The airbag (10) as in claim 1, **characterised in that** the inner separating wall (21) is at least secured to two opposite portions of he outer shell (15) wherein expansion of a portion of the outer shell is limited by the inner separating wall when the airbag (10) is being inflated, the inner separating wall (21) being perpendicular to a main direction (C) of impact when the airbag is inflated in the vehicle.

## Patentansprüche

1. Airbag (10) zum Aufprallschutz von Insassen eines Kraftfahrzeugs, wobei der Airbag (10) eine äußere Hülle (15) aufweist, die durch eine Einlassöffnung (19) mit einem Gas aufgeblasen werden kann, eine strömungshemmende innere Trennwand (21), die innerhalb der äußeren Hülle (15) vorgesehen ist und das innere Volumen der äußeren Hülle (15) derart in eine erste Kammer (11) und eine zweite Kammer (13) teilt, dass zuerst die erste Kammer (11) durch die Gaseinlassöffnung (19) aufgeblasen werden kann, um ein Basisvolumen zu bilden, und das Aufblasen der zweiten Kammer (13) durch die innere Trennwand (21) selektiv verzögert wird, um eine weitere Vergrößerung des Airbagvolumens in der Richtung einer Aufprallzone zu hemmen, wobei die strömungshemmende innere Trennwand mehrere Öffnungen (25) aufweist, die eine Fluid-Verbindung von der ersten Kammer (11) zu der zweiten Kammer (13) erlauben,
**dadurch gekennzeichnet, dass**
die mehreren Öffnungen (25) auch eine Fluid-Verbindung von der zweiten Kammer (13) zu der ersten Kammer (11) erlauben.

2. Airbag (10) nach Anspruch 1, ferner **gekennzeichnet durch** ein Paar von Spannelementen (27), die sich zwischen der äußeren Hülle (15) und der inneren Trennwand (21) erstrecken, wobei mindestens eine der mehreren Öffnungen (25) zwischen dem Paar von Spannelementen (27) angeordnet ist, und eine weitere der mehreren Öffnungen (25) zwischen einem von dem Paar von Spannelementen (27) und der äußeren Hülle (15) des Airbags (10) angeordnet ist.

3. Airbag (10) nach Anspruch 1,
**dadurch gekennzeichnet, dass**
die innere Trennwand (21) derart aufgebaut ist, dass sie zumindest teilweise gasdurchlässig ist.

4. Airbag (10) nach Anspruch 1,
**dadurch gekennzeichnet, dass**
die innere Trennwand (21) aus einem im Wesentlichen gasdurchlässigen Material ausgebildet ist, zum selektiven Zutritt von Gas aus der ersten Kammer (11) in die zweite Kammer (13).

5. Airbag (10) nach Anspruch 1,
**dadurch gekennzeichnet, dass**
die innere Trennwand (21) aus einem im Wesentlichen gasdichten Material besteht.

6. Airbag (10) nach Anspruch 1,
**dadurch gekennzeichnet, dass**
mindestens eine von den mehreren Öffnungen (25) in der inneren Trennwand (21) zwischen einem Randstreifen der inneren Trennwand (21) und dem Inneren der äußeren Hülle (15) des Airbags angeordnet ist.

7. Airbag (10) nach Anspruch 1,
**dadurch gekennzeichnet, dass**
die innere Trennwand (21) derart aufgebaut ist, dass sie strömungshemmend als eine Funktion des Drucks ist, wobei sie insbesondere Öffnungen (25) aufweist, die ihren Öffnungsbereich als eine Funktion des auf die innere Trennwand (21) wirkenden Gasdrucks ändern.

8. Airbag (10) nach Anspruch 7,
**dadurch gekennzeichnet, dass**
die innere Trennwand (21) eine Gasströmung von der ersten Kammer (11) in die zweite Kammer (13) im Wesentlichen erst erlaubt, nachdem eine bestimmte minimale Druckdifferenz zwischen der ersten Kammer (11) und der zweiten Kammer (13) erreicht ist.

9. Airbag (10) nach Anspruch 1,
**dadurch gekennzeichnet, dass**
die innere Trennwand (21) des Airbags (10) quer in Bezug auf die Hauptströmungsrichtung (B), in welcher das Gas durch die Gaseinlassöffnung (19) strömt, wenn der Airbag (10) sich in dem aufgeblasenen Zustand befindet, angeordnet ist.

10. Airbag (10) nach Anspruch 1,
**dadurch gekennzeichnet, dass**
die innere Trennwand (21) des Airbags (10) quer in Bezug auf die Einlassöffnung (19) und die Hauptrichtung (C) des Aufpralls angeordnet ist, wenn der Airbag in dem Fahrzeug aufgeblasen ist.

11. Airbag (10) nach Anspruch 1, ferner umfassend einen zweistufigen Gasgenerator, der ein erstes Gasvolumen und nachfolgend ein zweites Gasvolumen erzeugt, um den Airbag aufzublasen.

12. Airbag (10) nach einem der vorhergehenden Ansprüche,
**dadurch gekennzeichnet, dass**
bei vollständigem Aufblasen das Volumen der ersten Kammer kleiner als das Volumen der zweiten Kammer ist.

13. Airbag (10) nach Anspruch 9 oder 10,
**dadurch gekennzeichnet, dass**
die innere Trennwand (21) senkrecht zu der Einlassöffnung (19) und zu der Hauptrichtung (C) des Aufpralls ist, wenn der Airbag in dem Fahrzeug aufgeblasen ist.

14. Airbag (10) nach Anspruch 1,
**dadurch gekennzeichnet, dass**
die innere Trennwand (21) des Airbags (10) derart angeordnet ist, dass die innere Trennwand (21) die Ausdehnung des Airbags in einer ersten Richtung begrenzt, und die Gasströmung durch die mehreren Öffnungen im Wesentlichen der Gasströmung durch die Einlassöffnung (19) entgegengesetzt ist, wenn der Airbag in dem Fahrzeug aufgeblasen wird.

15. Airbag (10) nach Anspruch 14,
**dadurch gekennzeichnet, dass**
die erste Richtung senkrecht zu der Gasströmung durch die mehreren Öffnungen (25) ist.

16. Airbag (10) nach einem der vorhergehenden Ansprüche,
wobei zumindest eine von den mehreren Öffnungen (25) zwischen der äußeren Hülle (15) und der inneren Trennwand (21) angeordnet ist, wobei der gesamte Umfang der inneren Trennwand (21) nicht an der äußeren Hülle (15) befestigt ist.

17. Airbag (10) nach Anspruch 1,
**dadurch gekennzeichnet, dass**
die innere Trennwand (21) zumindest an zwei gegenüberliegenden Abschnitten der äußeren Hülle (15) befestigt ist, wobei die Ausdehnung eines Abschnitts der äußeren Hülle von der inneren Trennwand begrenzt wird, wenn der Airbag (10) aufgeblasen wird, und die innere Trennwand (21) senkrecht zu der Hauptrichtung (C) des Aufpralls ist, wenn der Airbag in dem Fahrzeug aufgeblasen ist.

## Revendications

1. Coussin gonflable de sécurité (10) pour la protection contre les chocs des occupants d'un véhicule à moteur, lequel coussin gonflable de sécurité (10) possède une enveloppe externe (15) qui peut être gonflée avec un gaz par une ouverture d'entrée (19), une paroi de séparation interne inhibant l'écoulement (21) prévue à l'intérieur de l'enveloppe externe (15) et séparant le volume interne de l'enveloppe externe (15) en un premier compartiment (11) et en un second compartiment (13) de sorte que le premier compartiment (11) est gonflable en premier lieu par l'ouverture d'entrée de gaz (19) pour former un volume de base et le second compartiment (13) a un gonflement sélectivement retardé par la paroi de séparation interne (21) pour empêcher l'agrandissement supplémentaire du volume du coussin gonflable de sécurité dans la direction d'une zone de choc, la paroi de séparation interne inhibant l'écoulement ayant une pluralité d'ouvertures (25) qui permettent la communication de fluide dudit premier compartiment (11) vers ledit second compartiment (13), **caractérisé en ce que** ladite pluralité d'ouvertures (25) permet également la communication de fluide dudit second compartiment (13) vers ledit premier compartiment (11).

2. Coussin gonflable de sécurité (10) selon la revendication 1, **caractérisé en outre en ce qu'**il comprend une paire d'éléments de tension (27) s'étendant entre l'enveloppe externe (15) et la paroi de séparation interne (21), dans lequel au moins une ouverture de ladite pluralité d'ouvertures (25) est disposée entre ladite paire d'éléments de tension (27) et une autre ouverture de ladite pluralité d'ouvertures (25) est disposée entre un élément de tension de ladite paire des éléments de tension (27) et l'enveloppe externe (15) du coussin gonflable de sécurité (10).

3. Coussin gonflable de sécurité (10) selon la revendication 1, **caractérisé en ce que** la paroi de séparation interne (21) est conçue pour être au moins partiellement perméable au gaz.

4. Coussin gonflable de sécurité (10) selon la revendication 1, **caractérisé en ce que** la paroi de séparation interne (21) est formée par un matériau essentiellement perméable au gaz pour l'admission sélective du gaz du premier compartiment (11) dans le second compartiment (13).

5. Coussin gonflable de sécurité (10) selon la revendication 1, **caractérisé en ce que** la paroi de séparation interne (21) est réalisée à partir d'un matériau essentiellement étanche au gaz.

6. Coussin gonflable de sécurité (10) selon la revendication 1, **caractérisé en ce que** au moins une ouverture de la pluralité d'ouvertures (25) est disposée dans la paroi de séparation interne (21) entre une bande marginale de la paroi de séparation interne (21) et l'intérieur de l'enveloppe externe (15) du coussin gonflable de sécurité.

7. Coussin gonflable de sécurité (10) selon la revendication 1, **caractérisé en ce que** la paroi de séparation interne (21) est conçue pour être inhibitrice de l'écoulement en fonction de la pression, en particulier avec les ouvertures (25) qui changent leur surface d'ouverture en fonction de la pression de gaz qui agit sur la paroi de séparation interne (2 1 ).

8. Coussin gonflable de sécurité (10) selon la revendication 7, **caractérisé en ce que** la paroi de séparation interne (21) permet au gaz de s'écouler du premier compartiment (11) dans le second compartiment (13) essentiellement uniquement après avoir atteint une certaine différence de pression minimale entre le premier compartiment (11) et le second compartiment (13).

9. Coussin gonflable de sécurité (10) selon la revendication 1, **caractérisé en ce que** la paroi de séparation interne (21) du coussin gonflable de sécurité (10) est disposée de manière transversale par rapport à une direction d'écoulement principale (B) dans laquelle le gaz s'écoule à travers l'ouverture d'entrée de gaz (19) lorsque le coussin gonflable de sécurité (10) est dans l'état gonflé.

10. Coussin gonflable de sécurité (10) selon la revendication 1, **caractérisé en ce que** la paroi de séparation interne (21) du coussin gonflable de sécurité (10) est disposée de manière transversale par rapport à l'ouverture d'entrée (19) et à une direction principale (C) de choc, lorsque le coussin gonflable de sécurité est gonflé dans le véhicule.

11. Coussin gonflable de sécurité (10) selon la revendication 1 comprenant en outre un générateur de gaz à deux étapes pour produire un premier volume de gaz et, successivement un second volume de gaz pour gonfler le coussin gonflable de sécurité.

12. Coussin gonflable de sécurité (10) selon l'une quelconque des revendications précédentes, **caractérisé en ce que** le volume du premier compartiment est inférieur au volume du second compartiment lors d'un gonflement complet.

13. Coussin gonflable de sécurité (10) selon les revendications 9 ou 10, **caractérisé en ce que** la paroi de séparation interne (21) est perpendiculaire à l'ouverture d'entrée (19) et à la direction principale (C) de choc, lorsque le coussin gonflable de sécurité est gonflé dans le véhicule.

14. Coussin gonflable de sécurité (10) selon la revendication 1, **caractérisé en ce que** la paroi de séparation interne (21) du coussin gonflable de sécurité (10) est positionnée de sorte que la paroi de séparation interne (21) limite l'expansion du coussin gonflable de sécurité dans une première direction et l'écoulement du gaz à travers ladite pluralité d'ouvertures est sensiblement opposé à l'écoulement du gaz à travers l'ouverture d'entrée (19), lorsque le coussin gonflable de sécurité est gonflé dans le véhicule.

15. Coussin gonflable de sécurité (10) selon la revendication 14, **caractérisé en ce que** la première direction est perpendiculaire à l'écoulement du gaz à travers ladite pluralité d'ouvertures (25).

16. Coussin gonflable de sécurité (10) selon l'une quelconque des revendications précédentes dans lequel au moins une ouverture de ladite pluralité d'ouvertures (25) est disposée entre l'enveloppe externe (15) et la paroi de séparation interne (21) dans lequel toute la périphérie de la paroi de séparation interne (21) n'est pas fixée à l'enveloppe externe (15).

17. Coussin gonflable de sécurité (10) selon la revendication 1, **caractérisé en ce que** la paroi de séparation interne (21) est au moins fixée à deux parties opposées de l'enveloppe externe (15) dans lequel l'expansion d'une partie de l'enveloppe externe est limitée par la paroi de séparation interne lorsque le coussin gonflable de sécurité (10) a été gonflé, la paroi de séparation interne (21) étant perpendiculaire à une direction principale (C) de choc lorsque le coussin gonflable de sécurité est gonflé dans le véhicule.
